# EUROPEAN PATENT APPLICATION

(11) **EP 4 749 767 A1**
(43) Date of publication of application: **27.05.2026**
(21) Application number: 24906598.8
(22) Date of filing: 26.12.2024
(51) Int. Cl.: H01M 10/613, H01M 10/6556

(54) **BATTERY MODULE, AND BATTERY CELL LIQUID-COOLING METHOD**

(30) Priority: 29.07.2024 CN 202421819503 U; 29.07.2024 CN 202411025235
(71) Applicant: HUIZHOU EVE POWER CO., LTD, Huizhou, Guangdong 516039 (CN); Eve Energy Co., Ltd., Huizhou, Guangdong 516006 (CN)
(72) Inventor: LIU, Xiangsheng, Huizhou, Guangdong 516039 (CN); LI, Xingyao, Huizhou, Guangdong 516006 (CN)
(74) Representative: Prinz & Partner mbB
(86) International application number: PCT/CN2024/142567
(87) International publication number: WO 2025/131128

(57) **Abstract**

Provided are a battery module and a liquid cooling method for cells. The battery module includes cells (1) and a housing (2). An empty cavity (21) is formed within the housing (2). Multiple cells (1) arranged in parallel are placed within the empty cavity (21). The empty cavity is filled with a cooling liquid. A bottom surface of the housing (2) and a top surface of the housing (2) are respectively provided with a first flow channel (5) and a second flow channel (4). Each of the first flow channel (5) and the second flow channel (4) communicates with the empty cavity (21) to inject the cooling liquid into the empty cavity (21).

## Description

### CROSS-REFERENCE TO RELATED APPLICATION

The present application claims priorities to Chinese Patent Application Nos. 202411025235.6 and 202421819503.7, filed with the China National Intellectual Property Administration (CNIPA) on Jul. 29, 2024, the disclosures of which are incorporated herein by reference in their entireties.

### TECHNICAL FIELD

The present application relates to the field of battery technologies, for example, a battery module and a liquid cooling method for cells.

### BACKGROUND

In a battery module, a liquid cooling method for cells mostly involves direct contact between a liquid cooling pipe or a liquid cooling plate and the cells for cooling, and the liquid cooling method requires the provision of the liquid cooling pipe or the liquid cooling plate.

### Technical problem

In the related art, the manner of cooling the battery by providing the liquid cooling pipe or the liquid cooling plate increases the cost of the battery module. Moreover, due to the limited contact area between the liquid cooling pipe or the liquid cooling plate and the cells, the liquid cooling effect on the cells is relatively poor.

### SUMMARY

### Technical solution

The present application provides a battery module. The battery module includes cells and a housing. An empty cavity is formed within the housing. Multiple cells arranged in parallel are placed in the empty cavity. The empty cavity is filled with a cooling liquid. A bottom surface of the housing and a top surface of the housing are respectively provided with a first flow channel and a second flow channel. Each of the first flow channel and the second flow channel communicates with the empty cavity to inject the cooling liquid into the empty cavity.

The present application further provides a liquid cooling method for cells applied to the cells in the battery module. The liquid cooling method for the cells includes that: a cooling liquid is injected into the empty cavity to submerge the cells in the cooling liquid; and the cooling liquid is injected into each of the second flow channel located on the top surface and the first flow channel located on the bottom surface, to enable the cooling liquid to flow at a top end of each cell of the cells and a bottom end of each cell of the cells, respectively, and to enable the cooling liquid in the second flow channel and the first flow channel to flow back into the empty cavity.

### Beneficial effects

According to the battery module and the liquid cooling method for the cells provided in the present application, the cooling liquid is injected into the empty cavity of the housing to submerge the cells in the cooling liquid, and the cooling liquid is injected into each of the second flow channel located on the top surface and the first flow channel located on the bottom surface, to enable the cooling liquid to flow at the top end of each cell of the cells and the bottom end of each cell of the cells, respectively, and to enable the cooling liquid in the second flow channel and the first flow channel to flow back into the empty cavity. That is, the cells can be completely submerged in the cooling liquid through the cooling liquid in the empty cavity, the cooling liquid in the second flow channel and the cooling liquid in the first flow channel, so that the cells can be completely submerged in the circulating cooling liquid for cooling, the uniform heat dissipation for different parts of the cells can be ensured, and the better liquid cooling effect is achieved. This improves the heat dissipation efficiency of the cells without using the liquid cooling pipe or the liquid cooling plate, and thus the cost can be saved. Moreover, the second flow channel and the first flow channel are integrated and disposed on the housing without additionally adding other structures for disposing of the flow channel, so that the cost of the entire battery module is lower.

### BRIEF DESCRIPTION OF THE DRAWINGS

FIG. 1 is a schematic view showing an exploded structure of a battery module provided in some embodiments of the present application;
FIG. 2 is a schematic structural view of a battery module (with removal of cells, an insulation bracket, integrated copper bars, and one third side plate) provided in some embodiments of the present application;
FIG. 3 is a schematic view showing an assembly structure between a first side plate, a second side plate, and a lower flow channel plate provided in some embodiments of the present application;
FIG. 4 is a schematic structural view of a second side plate provided in some embodiments of the present application;
FIG. 5 is a schematic view showing an exploded structure of a top cover assembly provided in some embodiments of the present application;
FIG. 6 is a schematic view showing an exploded structure of a bottom surface (with a lower cover plate located on the top) of a bottom plate assembly provided in some embodiments of the present application;
FIG. 7 is a schematic view of a bottom surface structure of a housing provided in some embodiments of the present application (with removal of a lower cover plate);
FIG. 8 is a schematic structural view of a lower flow channel plate provided in some embodiments of the present application; and
FIG. 9 is a flowchart of a liquid cooling method for cells provided in some embodiments of the present application.

### List of reference numbers

- 1: cell
- 2: housing
- 21: empty cavity
- 22: housing main body
- 221: first side plate
- 222: second side plate
- 223: third side plate
- 224: glue groove
- 23: top cover assembly
- 231: upper flow channel plate
- 2311: liquid injection hole
- 232: upper cover plate
- 2321: window
- 2322: shielding plate
- 24: bottom plate assembly
- 241: lower flow channel plate
- 2411: pressure relief through hole
- 2412: insulation sealing member
- 242: lower cover plate
- 2421: third through hole
- 3: third flow channel
- 32: liquid inlet spout
- 33: liquid inlet port
- 4: second flow channel
- 41: upper main flow channel
- 42: upper branch flow channel
- 43: first through hole
- 5: first flow channel
- 51: lower main flow channel
- 52: lower branch flow channel
- 53: second through hole
- 61: liquid outlet port
- 62: liquid outlet spout
- 64: outlet hole
- 65: liquid outlet main flow channel
- 7: integrated copper bar
- 8: insulation bracket
- 81: mounting hole
- 9: output pole

### DETAILED DESCRIPTION

### Embodiment one

This embodiment provides a battery module. The batter module has the relatively high heat dissipation efficiency, and has the simple structure and the relatively low cost. The battery module in this embodiment may be a lithium battery module. Here, no limitation is made on the specific type of the battery module.

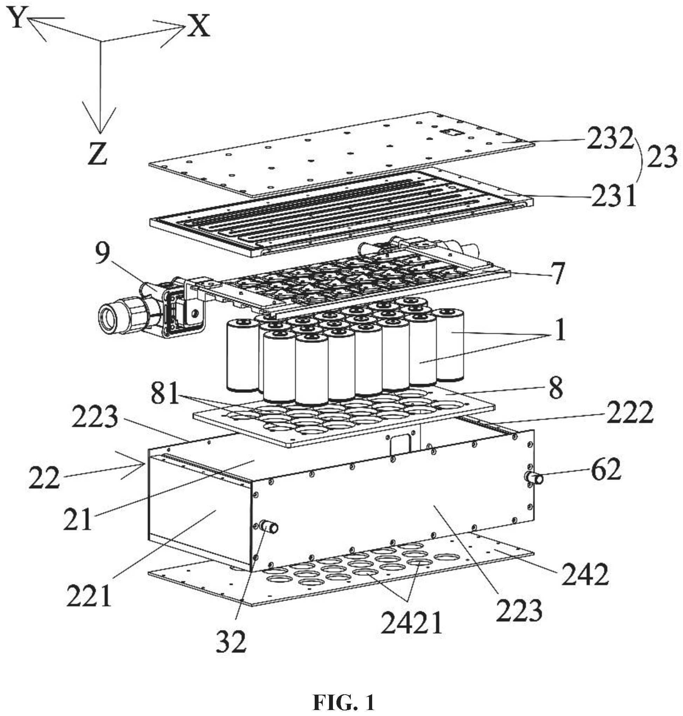

As shown in FIGS. 1 to 8, the battery module includes a housing 2 and multiple cells 1. An empty cavity 21 is formed within the housing 2, the multiple cells 1 arranged in parallel are placed within the empty cavity 21, a cooling liquid is injected into the empty cavity 21, a bottom surface of the housing 2 and a top surface of the housing 2 are respectively provided with a first flow channel 5 and a second flow channel 4, and each of the second flow channel 4 and the first flow channel 5 communicates with the empty cavity 21 to inject the cooling liquid into the empty cavity 21. The empty cavity 21 is filled with the cooling liquid.

The battery module in this embodiment changes the liquid cooling manner for the cells 1. The cooling liquid is injected into the empty cavity 21 of the housing 2 to submerge the cells 1 in the cooling liquid, and the cooling liquid is injected into each of the second flow channel 4 located on the top surface and the first flow channel 5 located on the bottom surface, to enable the cooling liquid to flow at the top end of each cell of the cells 1 and the bottom end of each cell of the cells 1, respectively, and to enable the cooling liquid in the second flow channel 4 and the first flow channel 5 to flow back into the empty cavity 21. That is, the cells 1 can be completely submerged in the cooling liquid through the cooling liquid in the empty cavity 21, the cooling liquid in the second flow channel 4 and the cooling liquid in the first flow channel 5, so that the cells 1 can be completely submerged in the circulating cooling liquid for cooling, the uniform heat dissipation for different parts of the cells 1 can be ensured, and the better liquid cooling effect is achieved. This improves the heat dissipation efficiency of the cells 1 without using the liquid cooling pipe or the liquid cooling plate, and thus the structure is simple and the cost can be saved. Moreover, the second flow channel 4 and the first flow channel 5 are integrated and disposed on the housing 2 without additionally adding other structures for disposing of the flow channel, so that the entire battery module is simpler in structure and is lower in cost.

In this embodiment, the cell 1 is a cylindrical cell, two ends of the cell 1 in an axial direction face the top surface of the housing 2 and the bottom surface of the housing 2, respectively, and sidewalls of two adjacent cells among the multiple cells 1 in a radial direction are abutted against each other, so that the energy density of the battery module can be improved while ensuring the heat dissipation.

As shown in FIGS. 1 to 3, a side surface of the housing 2 is provided with a third flow channel 3, and the third flow channel 3 communicates with each of the second flow channel 4 and the first flow channel 5 to enable a cooling liquid in the third flow channel 3 to flow into the second flow channel 4 and the first flow channel 5, respectively.

As shown in FIGS. 1 to 3, the housing 2 includes a housing main body 22. The housing main body 22 includes a first side plate 221 located on a side surface of the housing 2, the third flow channel 3 is disposed within the first side plate 221, the third flow channel 3 penetrates through the first side plate 221 along a Z-axis, and a liquid inlet port 33 communicating with the third flow channel 3 is disposed on a side surface of the first side plate 221.

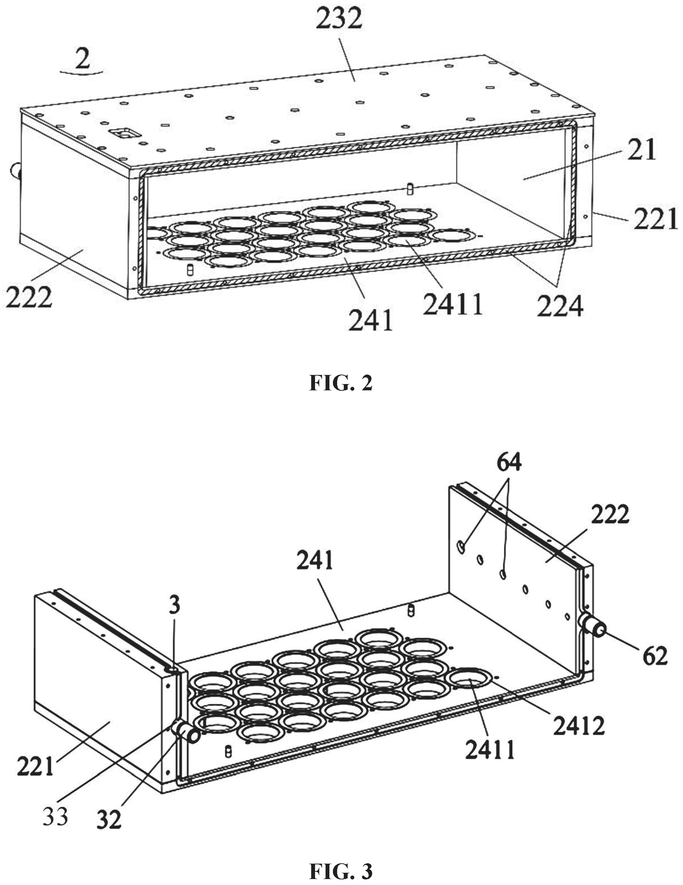

As shown in FIGS. 1 and 2, the housing main body 22 further includes a second side plate 222 and two third side plates 223 which are located on different side surfaces of the housing 2. The second side plate 222 and the first side plate 221 are disposed opposite to each other, and the two third side plates 223 are disposed opposite to each other. The first side plate 221, the second side plate 222 and the two third side plates 223 are connected to each other in an enclosed manner to form a square structure, that is, the housing main body 22 is a square structure having an opening, and the housing main body 22 has a top end opening and a bottom end opening communicating with each other.

As shown in FIGS. 1 and 3, the liquid inlet port 33 is connected to a liquid inlet spout 32, that is, the liquid inlet spout 32 passes through one third side plate of the two third side plates 223 and then is connected to the liquid inlet port 33, so that the cooling liquid can be delivered to the liquid inlet port 33 and the third flow channel 3 through the liquid inlet spout 32. In this embodiment, the cooling liquid may be silicone oil.

As shown in FIGS. 1 to 4, a fourth flow channel communicating with the empty cavity 21 is disposed within the second side plate 222, a side surface of the second side plate 222 is provided with a liquid outlet port 61 communicating with the fourth flow channel, and the fourth flow channel is configured to discharge the cooling liquid within the empty cavity 21 to the liquid outlet port 61.

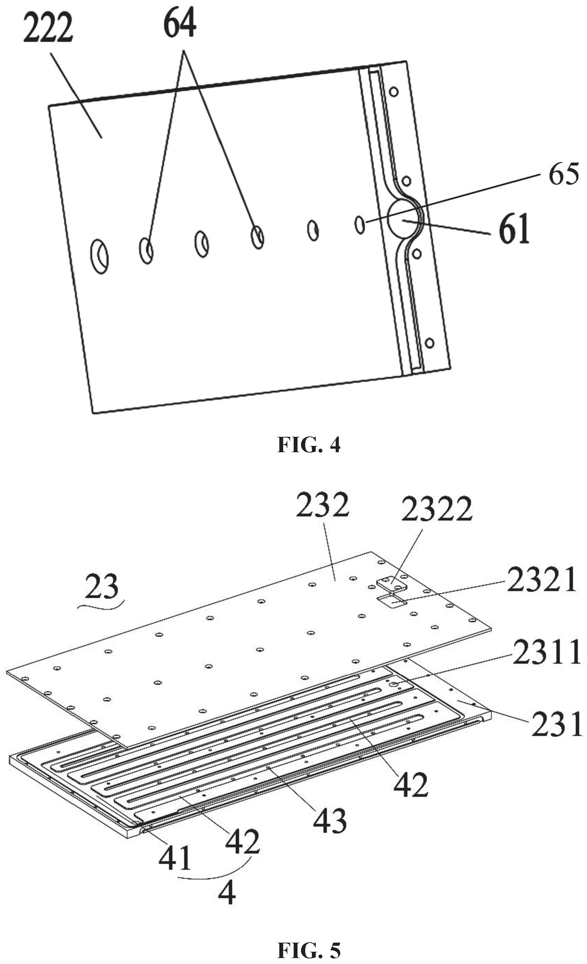

As shown in FIGS. 1 and 4, the liquid outlet port 61 is connected to a liquid outlet spout 62, and the liquid outlet spout 62 is located on the same side surface as the liquid inlet spout 32, that is, the liquid outlet spout 62 connected to the liquid outlet port 61 passes through one third side plate of the two third side plates 223, so that the cooling liquid can be conveyed outside the housing main body 22 through the liquid outlet spout 62.

As shown in FIGS. 3 and 4, the fourth flow channel includes a liquid outlet main flow channel 65 and multiple outlet holes 64. The liquid outlet main flow channel 65 extends along a Y-axis. The multiple outlet holes 64 are uniformly arranged at intervals along the Y-axis. Each of the multiple outlet holes 64 communicates with the empty cavity 21 and the liquid outlet main flow channel 65. A first end of the liquid outlet main flow channel 65 is located inside the second side plate 222. A second end of the liquid outlet main flow channel 65, which is opposite to the first end of the liquid outlet main flow channel 65, communicates with the liquid outlet port 61, that is, the liquid outlet main flow channel 65 does not penetrate through the entire second side plate 222 along the Y-axis.

As shown in FIGS. 3 and 4, in a direction of the Y-axis and facing the liquid outlet port 61, aperture diameters of the multiple outlet holes 64 decrease gradually to ensure that the flow rate of the cooling liquid entering each outlet hole of the multiple outlet holes 64 is more uniform, thereby ensuring the flow uniformity of the cooling liquid within the entire housing 2, ensuring the liquid cooling uniformity for the cells 1 located at different positions, and avoiding that part of the multiple cells 1 are overcooled while the other part of the multiple cells 1 are overheated.

As shown in FIG. 2, the first side plate 221, the second side plate 222 and the two third side plates 223 are sealingly connected to each other to ensure the overall sealing of the housing main body 22. A glue groove 224 is disposed on each of the first side plate 221, the second side plate 222 and the third side plate 223. Firstly, a sealant is coated in the glue groove 224, then the first side plate 221, the second side plate 222 and the two third side plates 223 are connected to each other in an enclosed manner to ensure the sealed connection among the first side plate 221, the second side plate 222 and the two third side plates 223. In order to ensure the connection stability of the entire housing main body 22, bolts are used to connect the first side plate 221, the second side plate 222 and the two third side plates 223 while making the sealed connection.

As shown in FIGS. 1 and 5, the housing 2 further includes a top cover assembly 23, the top cover assembly 23 is located on the top surface of the housing 2 and is sealingly connected to a top end opening of the housing main body 22 to ensure the sealing between the top cover assembly 23 and the housing main body 22. The top cover assembly 23 includes an upper flow channel plate 231, a second flow channel 4 is disposed on a top surface of the upper flow channel plate 231, and a first through hole 43 communicating with the empty cavity 21 is disposed within the second flow channel 4 to ensure the communication between the second flow channel 4 and the empty cavity 21 through the first through hole 43.

As shown in FIGS. 1 and 5, the upper flow channel plate 231 is horizontally disposed, and the upper flow channel plate 231 is sealingly connected to top ends of the first side plate 221, the second side plate 222 and the two third side plates 223, respectively. Moreover, integrated copper bars 7 are disposed below the upper flow channel plate 231, and the integrated copper bars 7 are respectively electrically connected to the multiple cells 1 to enable the series or parallel connection of the multiple cells 1. Two output ends of each integrated copper bar of the integrated copper bars 7 are respectively connected to two output poles 9, the two output poles 9 are located on the same side and are mounted on the third side plate 223, that is, the two output poles 9 are located on one third side plate of the two third side plates 223, and the liquid inlet spout 32/the liquid outlet spout 62 are located on the other third side plate 2of the two third side plates 223. The sealed connections between the upper flow channel plate 231 and the top ends of the first side plate 221, the second side plate 222 and the two third side plates 223 may adopt the sealing manner of the glue groove 224. Here, no limitation is made on the specific sealing manner.

As shown in FIG. 5, the second flow channel 4 includes an upper main flow channel 41 and multiple upper branch flow channels 42. The upper main flow channel 41 extends along the Y-axis, and a first end of the upper main flow channel 41 communicates with the third flow channel 3. The upper branch flow channels 42 extend along an X-axis, each upper branch flow channel of the multiple upper branch flow channels 42 communicates with a second end opposite to the first end of the upper main flow channel 41, the multiple upper branch flow channels 42 are arranged side by side at intervals along the Y-axis, and multiple first through holes 43 are disposed at intervals in the each upper branch flow channel 42, so that the cooling liquid in the multiple upper branch flow channels 42 may flow into the empty cavity 21 through the multiple first through holes 43.

The multiple upper branch flow channels 42 that are arranged side by side at intervals along the Y-axis are provided, so that tops of the multiple cells 1 within the empty cavity 21 may be covered by the multiple upper branch flow channels 42, and the cooling liquid flows through the top of each cell of the multiple cell 1, thereby ensuring the liquid cooling uniformity for the multiple cells 1. In this embodiment, five upper branch flow channels 42 are provided, and seven first through holes 43 are disposed in each upper branch flow channel of the five upper branch flow channels 42. Here, no specific limitation is made on the setting number of the upper branch flow channels 42 and the first through holes 43.

The X-axis, the Y-axis and the Z-axis are perpendicular to each other.

As shown in FIGS. 1 and 5, the top cover assembly 23 further includes an upper cover plate 232, the upper cover plate 232 is sealingly disposed to cover a side surface, provided with the second flow channel 4, of the upper flow channel plate 231, to provide the sealing effect for the second flow channel 4. This ensures that the cooling liquid may only flow along the second flow channel 4, and prevents the cooling liquid from overflowing outside the upper flow channel plate 231. The upper cover plate 232 and the upper flow channel plate 231 may be connected in a sealed manner by means of welding or adhesive bonding. Here, no specific limitation is made.

As shown in FIG. 5, a window 2321 configured to inject the cooling liquid into the empty cavity 21 is disposed on the upper cover plate 232, and a shielding plate 2322 is disposed to cover the window 2321 in a detachable manner, so that when the cooling liquid needs to be injected into the empty cavity 21 through the window 2321, the shielding plate 2322 is detached to open the window 2321; and when the injection is completed, the shielding plate 2322 is disposed to cover the window 2321 to close the window 2321, thereby avoiding the dust and other impurities from entering the empty cavity 21 through the window 2321.

As shown in FIG. 5, a liquid injection hole 2311 is also disposed on the upper flow channel plate 231 and is correspondingly disposed below the window 2321 to inject the cooling liquid into the empty cavity 21 through the window 2321 and the liquid injection hole 2311 in sequence. Moreover, the shielding plate 2322 is configured to be disposed to cover the liquid injection hole 2311 while shielding the window 2321.

As shown in FIG. 1, FIG. 6 and FIG. 7, the housing 2 further includes a bottom plate assembly 24, the bottom plate assembly 24 is located on a bottom surface of the housing 2 and is sealingly connected to a bottom end opening of the housing main body 22 to ensure the sealing connection between the housing main body 22 and the bottom plate assembly 24. The bottom plate assembly 24 includes a lower flow channel plate 241, a first flow channel 5 is disposed on a bottom surface of the lower flow channel plate 241, and a second through hole 53 communicating with the empty cavity 21 is disposed within the first flow channel 5 to ensure the communication between the first flow channel 5 and the empty cavity 21 through the second through hole 53.

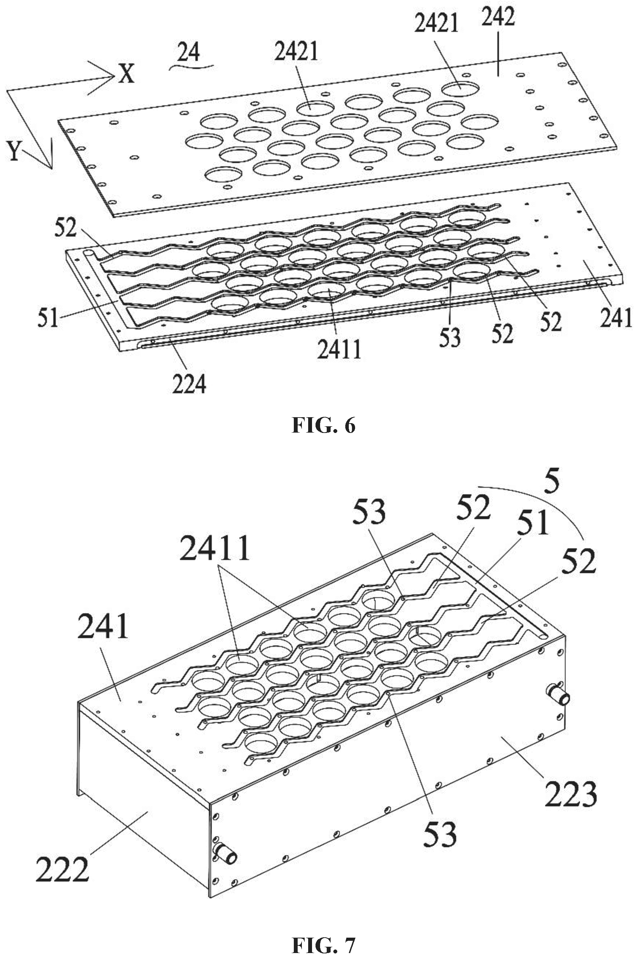

As shown in FIGS. 1 and 6, the lower flow channel plate 241 is horizontally disposed, and the lower flow channel plate 241 is sealingly connected to bottom ends of the first side plate 221, the second side plate 222 and the two third side plates 223, respectively. Moreover, the sealing connection between the lower flow channel plate 241 and the bottom ends of the first side plate 221, the second side plate 222 and the two third side plates 223 may adopt the sealing manner of the glue groove 224. Here, no limitation is made on the specific sealing manner.

As shown in FIGS. 6 and 7, the first flow channel 5 includes a lower main flow channel 51 and multiple lower branch flow channels 52. The lower main flow channel 51 extends along the Y-axis, and a first end of the lower main flow channel 51 communicates with the third flow channel 3. The lower branch flow channels 52 extend along the X-axis, each lower branch flow channel of the multiple lower branch flow channels 52 communicates with a second end opposite to the first end of the lower main flow channel 51, the multiple lower branch flow channels 52 are arranged side by side at intervals along the Y-axis, and multiple second through holes 53 are disposed at intervals in each lower branch flow channel of the multiple lower branch flow channels 52, so that the cooling liquid in the multiple upper branch flow channels 42 may flow into the empty cavity 21 through the multiple first through holes 43.

The multiple lower branch flow channels 52 that are arranged side by side at intervals along the Y-axis are provided, so that bottoms of the multiple cells 1 within the empty cavity 21 may be covered by the multiple lower branch flow channels 52, and the cooling liquid flows through the bottom of each cell of the multiple cells 1, thereby ensuring the liquid cooling uniformity for the multiple cells 1. In this embodiment, five lower branch flow channels 52 are provided, and seven second through holes 53 are disposed in each lower branch flow channel of the five lower branch flow channels 52. Here, no specific limitation is made on the setting number of the lower branch flow channels 52 and the second through holes 53.

As shown in FIGS. 1 and 6, the bottom plate assembly 24 further includes a lower cover plate 242, the lower cover plate 242 is sealingly disposed to cover a side surface, provided with the first flow channel 5, of the lower flow channel plate 241, to provide the sealing effect for the first flow channel 5. This ensures that the cooling liquid may only flow along the first flow channel 5, and prevents the cooling liquid from overflowing outside the lower flow channel plate 241. The lower cover plate 242 and the lower flow channel plate 241 may be connected in a sealed manner by means of welding or adhesive bonding. Here, no specific limitation is made.

As shown in FIGS. 6 to 8, multiple pressure relief through holes 2411 are disposed on the lower flow channel plate 241, and one cell 1 is disposed in correspondence with one pressure relief hole 2411, to discharge generated high-temperature and high-pressure gases outside the battery module through a corresponding pressure relief through hole 2411 when the thermal runaway occurs in the cell 1, which ensures the safety of the battery module during the thermal runaway. Accordingly, a third through hole 2421 matched with a pressure relief through hole among the multiple pressure relief through holes 2411 is disposed on the lower cover plate 242, that is, one pressure relief through hole 2411 is disposed in alignment with one third through hole 2421 to ensure that the high-temperature and high-pressure gases within the pressure relief through hole 2411 may be discharged to the outside of the battery module through the third through hole 2421, thereby avoiding the interference with the pressure relief operation by the lower cover plate 242.

A diameter of the pressure relief through hole 2411 is slightly less than a diameter of the cell 1 to ensure that the pressure relief valve of the cell 1 is aligned with the pressure relief through hole 2411, which ensures that the high-temperature and high-pressure gases discharged from the pressure relief valve may be discharged directionally through the pressure relief through hole 2411.

Since the multiple lower branch flow channels 52 and the multiple pressure relief through holes 2411 are respectively disposed on the lower flow channel plate 241, each lower branch flow channel 52 is disposed to be bent along the X-axis. As shown in FIGS. 6 and 7, the lower branch flow channel 52 is not a straight flow channel parallel to the X-axis, but rather a bent flow channel in a wavy line shape. Therefore, the bent arrangement is provided so that the lower branch flow channel 52 and the pressure relief through hole 2411 may be kept away from each other, the lower branch flow channel 52 is prevented from communicating with the pressure relief through hole 2411, and the operation of the pressure relief and the operation of the liquid cooling of the battery module can be ensured to not interfere with each other. Here, the specific bending angle and bending amplitude of the lower branch flow channel 52 are not limited, as long as it is ensured that the lower branch flow channel 52 does not communicate with the pressure relief through hole 2411.

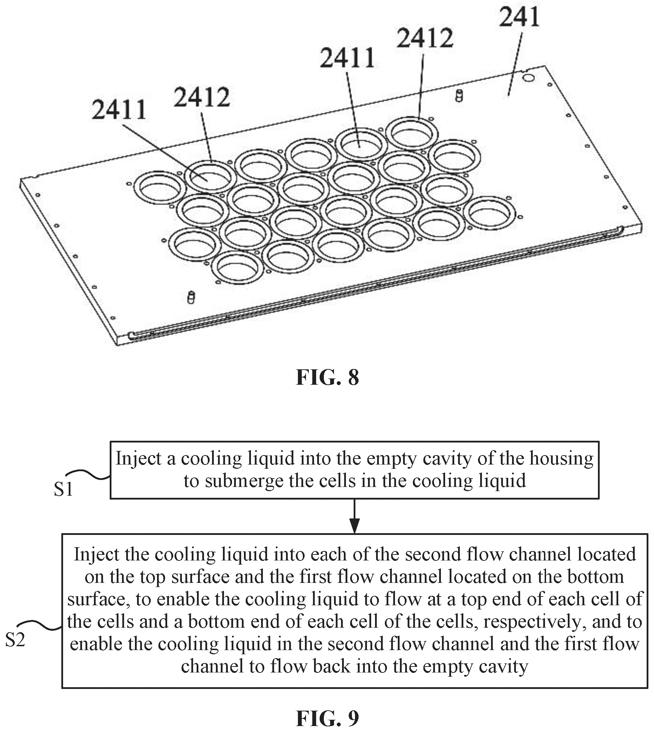

As shown in FIGS. 3 and 8, an insulation sealing member 2412 is connected between the cell 1 and the pressure relief through hole 2411, and the insulation sealing member 2412 may be an annular insulation sealing ring. An annular groove is disposed on a top surface of the lower flow channel plate 241 facing the empty cavity 21, one annular groove is disposed around the outer periphery of one pressure relief through hole 2411, and the annular insulation sealing member is mounted within the annular groove. When the cells 1 are mounted in the empty cavity 21, the cells 1 abut against the annular insulation sealing ring, so that the pressure relief valve of the cells 1 is located within the pressure relief through hole 2411.

By setting the insulation sealing member 2412, on the one hand, the direct contact between the cells 1 and the lower flow channel plate 241 can be avoided, to insulate the cells 1 and the lower flow channel plate 241 from each other; on the other hand, the gap between the cells 1 and the pressure relief through hole 2411 can be sealed, to avoid the cooling liquid in the empty cavity 21 from flowing out through the gap between the pressure relief through hole 2411 and the cells 1.

As shown in FIG. 1, the battery module further includes an insulation bracket 8, the insulation bracket 8 is mounted within the empty cavity 21, and the multiple cells 1 are mounted on the insulation bracket 8, that is, multiple mounting holes 81 are disposed on the insulation bracket 8, and one cell 1 is snapped into one mounting hole among the multiple mounting holes 81. That is, a diameter of the mounting hole 81 is slightly less than a diameter of the cell 1, so that the cell is snap-fitted and fixed within the mounting hole 81, to fix the cell 1 within the empty cavity 21. The insulation bracket 8 is affixed within the empty cavity 21 through glue, that is, the insulation bracket 8 is bonded to the inner wall surface of each of the two third side plates 223 by glue.

By setting the insulation bracket 8 is provided, on the one hand, the insulation bracket 8 may be configured to fix the cell 1 and ensure the installation support of the cell 1 within the empty cavity 21, and on the other hand, the cell 1 and the lower flow channel plate 241 can be insulated and the better insulation effect between the cell 1 and the lower flow channel plate 241 can be ensured. In this embodiment, the insulation bracket 8 may be a plastic bracket.

The battery module in this embodiment adopts a manner of simultaneously supplying liquid from the upper and lower parts along the Z-axis and discharging the liquid from the side surface, so that the cooling liquid has a relatively short flow path within the housing 2, it is ensured that the cooling liquid may cool the cell 1 in time to achieve the better liquid cooling effect on the cell 1, and moreover, the setting number of flow channels is relatively small, the processing cost of the flow channel is reduced, and thus the entire battery module may be ensured to achieve the good heat-dissipation efficiency while keeping the relatively low cost.

### Embodiment two

In this embodiment, a liquid cooling method for cells is provided. The cells 1 in the battery module are cooled by liquid by using the liquid cooling method for the cells. As shown in FIG. 9, the liquid cooling method for the cells includes the following steps.
In S1, a cooling liquid is injected into the empty cavity 21 to submerge the cells 1 in the cooling liquid.
In S2, the cooling liquid is injected into each of the second flow channel 4 located on the top surface of the housing main body 22 and the first flow channel 5 located on the bottom surface of the housing main body 22, to enable the cooling liquid to flow at a top end of each cell of the cells 1 and a bottom end of each cell of the cells 1, respectively, and to enable the cooling liquid in the second flow channel 4 and the first flow channel 5 to flow back into the empty cavity 21.

The specific liquid cooling process of the liquid cooling method for the cells in this embodiment is as follows. The cooling liquid is injected into the empty cavity 21 through the window 2321 on the upper cover plate 232 and the liquid injection hole 2311 on the upper flow channel plate 231 to fill the entire empty cavity 21 with the cooling liquid. In this case, the cells 1 are submerged in the cooling liquid.

Then, the cooling liquid is conveyed to the liquid inlet port 33 and the third flow channel 3 through the liquid inlet spout 32. The cooling liquid in the third flow channel 3 flows upward and downward along the Z-axis, so that the cooling liquid in the third flow channel 3 flows upwardly along the Z-axis into the upper main flow channel 41 and then flows into multiple upper branch flow channels 42 through the upper main flow channel 41, whereby the cooling liquid flows on the top surface of each cell of the cells 1. Moreover, the cooling liquid in the upper branch flow channel 42 flows into the empty cavity 21 through the multiple first through holes 43.

Moreover, the cooling liquid in the third flow channel 3 flows downwardly along the Z-axis into the lower main flow channel 51 and then flows into the multiple lower branch flow channels 52 through the lower main flow channel 51, whereby the cooling liquid flows on the bottom surface of each cell of the cells 1. In addition, the cooling liquid in the lower branch flow channel 52 flows into the empty cavity 21 through the multiple second through holes.

The cooling liquid, passing through the cells 1 cooled by liquid, within the empty cavity 21 flows into the liquid outlet main flow channel 65 through multiple outlet holes 64, to enable the cooling liquid in the liquid outlet main flow channel 65 to flow out of the battery module through the liquid outlet port 61 and the liquid outlet spout 62 in sequence. Therefore, the cyclic flow of the cooling liquid is achieved, and the cells 1 are always completely submerged in the cooling liquid, thereby ensuring the liquid cooling effect on the cells 1.

In the liquid cooling method for the cells in this embodiment, a shorter cooling path for the cells 1 and a simple cooling manner are required, the uniform heat dissipation on different parts of the cells 1 can be ensured, the better liquid cooling effect is achieved, and thus it is ensured that the cells 1 have the relatively high heat dissipation efficiency.

## Claims

1. A battery module, comprising:
cells (1); and
a housing (2), wherein an empty cavity (21) is formed within the housing (2), a plurality of the cells (1) arranged in parallel are placed within the empty cavity (21), a cooling liquid is injected into the empty cavity (21), a bottom surface of the housing (2) and a top surface of the housing (2) are respectively provided with a first flow channel (5) and a second flow channel (4), and each of the first flow channel (5) and the second flow channel (4) communicates with the empty cavity (21) to inject the cooling liquid into the empty cavity (21).

2. The battery module of claim 1, wherein a side surface of the housing (2) is provided with a third flow channel (3), and the third flow channel (3) communicates with each of the second flow channel (4) and the first flow channel (5) to enable a cooling liquid in the third flow channel (3) to flow into the second flow channel (4) and the first flow channel (5), respectively.

3. The battery module of claim 2, wherein the housing (2) comprises a housing main body (22), the housing main body (22) comprises a first side plate (221) located on the side surface of the housing (2), the third flow channel (3) is disposed within the first side plate (221), the third flow channel (3) penetrates through the first side plate (221) along a Z-axis, and a side surface of the first side plate (221) is provided with a liquid inlet port (33) communicating with the third flow channel (3).

4. The battery module of claim 3, wherein the housing main body (22) further comprises a second side plate (222) located on a side surface of the housing (2), the second side plate (222) and the first side plate (221) are disposed opposite to each other, a fourth flow channel communicating with the empty cavity (21) is disposed within the second side plate (222), a side surface of the second side plate (222) is provided with a liquid outlet port (61) communicating with the fourth flow channel, and the fourth flow channel is configured to convey the cooling liquid within the empty cavity (21) to the liquid outlet port (61).

5. The battery module of claim 3 or 4, wherein the housing (2) further comprises a top cover assembly (23), the top cover assembly (23) is located on the top surface of the housing (2) and is sealingly connected to a top end opening of the housing main body (22), the top cover assembly (23) comprises an upper flow channel plate (231), a top surface of the upper flow channel plate (231) is provided with the second flow channel (4), and a first through hole (43) communicating with the empty cavity (21) is disposed within the second flow channel (4).

6. The battery module of claim 5, wherein the second flow channel (4) comprises:
an upper main flow channel (41) extending along a Y-axis, wherein a first end of the upper main flow channel (41) communicates with the third flow channel (3); and
a plurality of upper branch flow channels (42) extending along an X-axis, wherein each upper branch flow channel of the plurality of upper branch flow channels (42) communicates with a second end of the upper main flow channel (41), the plurality of upper branch flow channels (42) are arranged side by side at intervals along the Y-axis, and a plurality of first through holes (43) are disposed at intervals within the each upper branch flow channel; and
wherein the X-axis, the Y-axis and the Z-axis are perpendicular to each other.

7. The battery module of claim 5, wherein the top cover assembly (23) further comprises an upper cover plate (232), the upper cover plate (232) is sealingly disposed to cover one side, provided with the second flow channel (4), of the upper flow channel plate (231), and a window (2321) configured to inject the cooling liquid into the empty cavity (21) is disposed on the upper cover plate (232).

8. The battery module of claim 3 or 4, wherein the housing (2) further comprises a bottom plate assembly (24), the bottom plate assembly (24) is located on the bottom surface of the housing (2) and is sealingly connected to a bottom end opening of the housing main body (22), the bottom plate assembly (24) comprises a lower flow channel plate (241), a bottom surface of the lower flow channel plate (241) is provided with the first flow channel (5), and a second through hole (53) communicating with the empty cavity (21) is disposed within the first flow channel (5).

9. The battery module of claim 8, wherein the first flow channel (5) comprises:
a lower main flow channel (51) extending along an Y-axis, wherein a first end of the lower main flow channel (51) communicates with the third flow channel (3); and
a plurality of lower branch flow channels (52) extending along an X-axis, wherein each lower branch flow channel of the plurality of lower branch flow channels (52) communicates with a second end of the lower main flow channel (51), the plurality of lower branch flow channels (52) are arranged side by side at intervals along the Y-axis, and a plurality of second through holes (53) are disposed at intervals within each lower branch flow channel of the plurality of lower branch flow channels (52).

10. The battery module of claim 8, wherein a plurality of pressure relief through holes (2411) are disposed on the lower flow channel plate (241), one cell of the cells (1) is disposed in correspondence with one pressure relief through hole of the plurality of pressure relief through holes (2411), and an insulation sealing member (2412) is connected between the one cell (1) and the one pressure relief through hole (2411).

11. The battery module of claim 8, wherein the bottom plate assembly (24) further comprises a lower cover plate (242), wherein the lower cover plate (242) is sealingly disposed to cover a side surface, provided with the first flow channel (5), of the lower flow channel plate (241).

12. The battery module of any one of claims 1 to 4, wherein each cell of the cells (1) is a cylindrical cell, two ends of the each cell in an axial direction face the top surface of the housing (2) and the bottom surface of the housing (2), respectively, and sidewalls of two adjacent cells (1) among the cells (1) in a radial direction are abutted against each other.

13. A liquid cooling method for cells, applied to the cells (1) in the battery module of any one of claims 1 to 12, wherein the method comprises:
injecting a cooling liquid into the empty cavity (21) to submerge the cells (1) in the cooling liquid; and
injecting the cooling liquid into each of the second flow channel (4) located on the top surface and the first flow channel (5) located on the bottom surface, to enable the cooling liquid to flow at a top end of each cell of the cells (1) and a bottom end of each cell of the cells (1), respectively, and to enable the cooling liquid in the second flow channel (4) and the first flow channel (5) to flow back into the empty cavity (21).
